# EUROPEAN PATENT SPECIFICATION

(11) **EP 0 573 447 B1**
(45) Date of publication and mention of the grant of the patent: **30.11.1994**
(21) Application number: 92903948.5
(22) Date of filing: 07.02.1992
(51) Int. Cl.: B29C 65/22

(54) **INSULATED HEAT SEALING JAW**
WAERMEISOLIERTE SCHWEISSBACKE
MACHOIRE DE THERMOSOUDAGE ISOLEE

(30) Priority: 26.02.1991 GB 9103953
(43) Date of publication of application: 15.12.1993
(73) Proprietor: Du Pont Canada Inc., Mississauga, Ontario L5M 2H3 (CA)
(72) Inventor: RILEY, David, C., Kingston, Ontario K7M 2V7 (CA)
(74) Representative: Harrison, David Christopher
(86) International application number: CA9200054
(87) International publication number: WO9214601

## Description

The present invention relates to a heat sealing element for a tube forming machine, and particularly for a form, fill and seal machine suitable for packaging flowable materials, especially liquids.

For many years, milk has been packaged in pouches made on vertical form, fill and seal machines. Such pouches have been sold to household consumers and, in use, such milk-filled pouches are stood within an open-mouthed pitcher. More recently, such pouches have been used to package other flowable comestibles, mayonnaise, caramel, scrambled eggs, tomato ketchup, chocolate fudge, salad dressings, preserves and the like. Pouches containing such comestibles are usually sold to "institutional" buyers, e.g. restaurants.

It is well known to package flowable materials, for example milk, mayonnaise and the like on so-called vertical form, fill and seal machines. Using one such machine, a flat web of synthetic thermoplastic film is unwound from a roll and formed into a continuous tube in a tube forming section, by sealing the longitudinal edges of the film together to form a so-called lap seal or a so-called fin seal. The tube thus formed is pulled vertically downwards to a filling station. The tube is then collapsed across a transverse cross-section of the tube, the position of the cross-section being at a sealing device below the filling station. A transverse heat seal is made, by the sealing device, at the collapsed portion of the tube, thus making an airtight seal across the tube. The sealing device generally comprises a pair of jaws. The material-to-be-packaged, e.g. milk, is caused to enter the tube continuously. As a result, sealing of the film takes place with the material-to-be-packaged between the heat sealing surfaces in the tube. After the sealing has been completed, the jaws are opened and the tube is then caused to move downwardly a predetermined distance. Such movement may be under the influence of the weight of the material in the tube, or may be caused by pulling or mechanically driving the tube. The jaws of the sealing device are closed again, thus collapsing the tube at a second transverse section. The second transverse section may be above, usually just above, the air/material interface in the tube, or the second transverse section may be below the air/material interface. The sealing device clamps, seals and severs the tube transversely at the second transverse section. The material-filled portion of the tube is now in the form of a pillow shaped pouch. Thus the sealing device has sealed the top of the filled pouch, sealed the bottom of the next-to-be formed pouch, all in one operation. One such vertical form and fill machine of the type described above is sold under the trade mark PREPAC.

Some machinery may be operated so that the material-to-be-packaged is caused to enter the tube intermittently. In such cases, the material to be packaged, e.g. mayonnaise, is caused to enter the tube, at the filling station anytime after the jaws have closed to form the first transverse seal. When the seal has been made and the jaws opened, the tube is then caused to move downwardly a predetermined distance where the second seal is made. Before closing the jaws to make this second transverse seal, the flow of material being packaged is stopped so that there is no material-to-be-packaged between the heat sealing surfaces in the tube.

With some other machines, the sealing device does not sever the tube at the second transverse section, but does sever the tube subsequently. With yet other machines the jaws of the heat sealing device reciprocate up and down. With such machines, the jaws clamp, seal and sever the tube of film while moving in a downward direction, the jaws then open and return upwards in the open position. The downward movement of the closed jaws also serve to advance the tubular film downwardly.

The present invention relates to a heat sealing assembly for any of the above mentioned machines.

A sealing device commonly used is a so-called "impulse sealer" in which an electrical current flows through the sealing element for only a fraction of the cycle time between operations. The impulse sealer may be a round wire, e.g. a "piano" wire about 2.00 mm to 2.29 mm diameter, electrically insulated from a water-cooled supporting jaw. The impulse sealer is more commonly rolled from wire stock into a flat ribbon with a longitudinal bead on the centre of one side, hereinafter referred to as a solid beaded element. The round wire and solid beaded element impulse sealers in combination with conventional flat faced heat sealing jaws, are satisfactory for form and fill machines when packaging liquids such as milk, water or other highly aqueous products. Other element shapes are generally more satisfactory on form, fill and seal machines when packaging thick flowable materials such as mayonnaise, chocolate fudge, scrambled egg mix, dressings, jams and the like.

Other kinds of sealers are known, e.g. as disclosed in U.S. Patent 3 692 613, which issued 1972 September 19 to R.E. Pederson, in U.S. Patent 4 115 182, which issued 1978 September 19 to M.M. Wildmoser and U.S. Patent 4 744 845, which issued 1988 May 17 to J. Posey.

When using impulse sealers it is necessary to electrically insulate the heat sealing element from the metal jaw upon which it is mounted, and to provide partial thermal insulation from the jaw. This is most often accomplished by placing woven glass cloth impregnated with polytetrafluoroethylene between the jaw and the heat sealing element. It is necessary to heat the heat sealing element quickly when coming in contact with the film-to-be-sealed because substantial quantities of heat are required to seal the film. As is known to those skilled in the art, the jaw is wider than the flattened film tube in order to allow room to adjust the transverse "tracking" of the tube. Furthermore, the heat sealing element extends beyond the edges of the jaws in order to permit securement of the ends of the element to an electrical terminal. Because of this arrangement, the heat sealing element tends to be hotter at the end of the jaw where the film does not come in contact with the film. Consequently the woven glass fibre cloth is continually subjected to high heat without there being film to drain the heat away. Thus the polytetrafluoroethylene often becomes degraded or burnt relatively quickly and it is necessary to replace the woven glass fibre cloth at frequent intervals. Previous attempts to alleviate this problem have not been entirely successful and the present invention seeks to address this problem.

The present invention provides a heat sealing assembly, for sealing at least two layers of thermoplastic film, comprising first and second jaws, an electrical impulse heat sealing element mounted on the first jaw, electrical terminals connected to said element and at least one electrically and thermally insulating film or tape between the first jaw and the heat sealing element, at least one of said jaws being capable of transverse motion and adapted to collapse a tubular film made from said thermoplastic film and passing between said jaws, the improvement wherein the first jaw has a thermally insulating material embedded therein along a length about equal to the width of the flattened film and having a width at least as great as the width of the sealing element.

In one embodiment the thermally insulating material has a width of at least 2.0 mm and a thickness of at least 1 mm.

In another embodiment the thermally insulating material has a width of up to about 100 mm wider than the heat sealing element.

In a further embodiment the thermally insulating material as made from a glass fibre-filled epoxy insulating material having a thermal conductance of less than 500 W/(m2.K).

In yet another embodiment the thermally insulating material is made from a glass fibre-filled epoxy insulating material having a coefficient of thermal conductivity of from 0.22 W/(m.K) to 2.2 W/(m.K) and a width of from 2 to 22 mm and a thickness of from 4 to 10 mm.

In a further embodiment the thermally insulated film or tape is a woven glass fibre tape coated or impregnated with a polytetrafluoroethylene.

In another embodiment the thermally insulated film is a polyimide film.

The requirements for the thermally insulating material will be understood by those skilled in the art as being a good thermal insulator with sufficient mechanical strength for the repetitions of the heat sealing operation. Such operation may have intermittent temperatures of up to 300°C, and at least a year's operation at this level would be commercially desirable. The material preferably should have good compressive strength and should be sufficiently hard, but not brittle, to withstand the constant hammering of the closing jaws. The material should also be dimensionally stable so that there is little creep or shrinkage of the material.

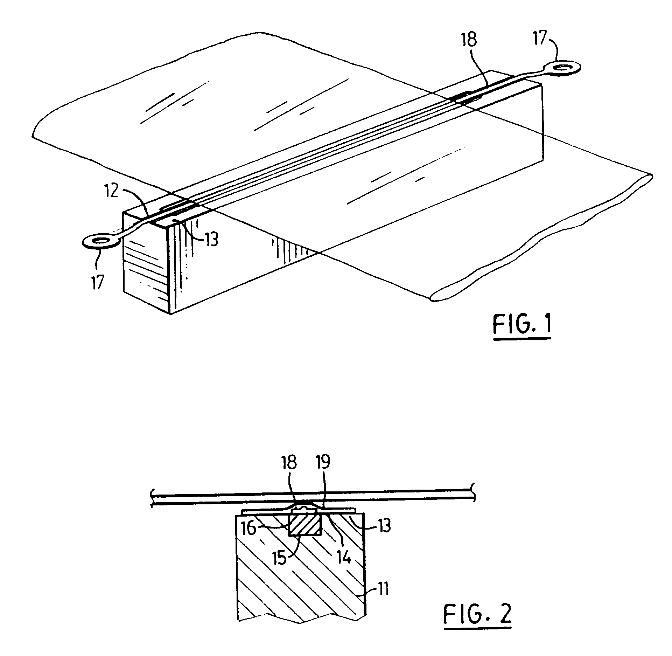

An embodiment of the invention is illustrated in the accompanying drawings, Figure 1 of which shows a three quarter view of a preferred embodiment of the present invention and Figure 2 of which shows a simplified cross-section of a jaw with the thermal insulating material therein.

The drawings show first heat sealing jaw 11 upon which is mounted a heat sealing element 12. The heat sealing assembly also has cooperating second heat sealing jaw (not shown). Both jaws are mounted on a form and fill machine (not shown) as is known in the art. Both jaws may move reciprocally towards and away from each other. Heat sealing jaw 11 is usually made of a thermally conductive material such as aluminium and is water cooled. Along the full length of face 13 of the first jaw is placed a woven glass fibre cloth 14 (not shown in Figure 1, for clarity), impregnated with a polytetrafluoroethylene. Along the length of jaw 11 there is a channel 15, in which is placed an thermally insulating material 16, e.g. bar made from a glass fibre-filled epoxy resin. Heat sealing element 12 comprises connector pieces 17 and ribbon 18. In the embodiment shown, ribbon 18 is a formed from wire stock rolled into a flat ribbon with a longitudinal centre bead on the side distal to jaw 11. Connector pieces 17 have holes therein for attaching to electrical terminals (not shown). The heat sealing element is typically made from a nickel-chromium alloy. A further layer of woven glass fibre cloth impregnated with polytetrafluoroethylene 19 (not shown in Figure 1) is placed over ribbon 18. This woven cloth acts primarily to prevent sticking and burning of the thermoplastic film which, but for the cloth, would come into contact with heat sealing element 12. It is also possible to use polyimide film in lieu of the cloth 19.

The second jaw (not shown) has a silicone rubber backing strip upon which the heat sealing element 12 may press in order to sever and seal the thermoplastic film therebetween. With prior art heat sealing assemblies it has been found that under normal operating conditions for packaging milk and the like, e.g. at operating speed of up to about 45 pouches per minute, the woven glass fibre cloth impregnated with polytetrafluoroethylene is able to withstand the temperatures required to make the heat seals. However, as the speed of the machine is increased, e.g. to about 60 pouches per minute, there has been a tendency to increase the temperature of the heat sealing element in order to seal and sever the thermoplastic film. By increasing the temperature of the heat sealing element, the portions which are not in contact with the film, sometimes referred to as the outboard ends of the heat sealing element, the element temperatures are even higher because there is not the thermal load from melting the film. These higher temperatures cause early deterioration of the woven glass fibre cloth impregnated with polytetrafluoroethylene and heat aging of the silicone rubber which shows up as grooves worn into the rubber where the element makes contact. In the case of polyethylene film, the excessive temperature also causes the polyethylene of the pouch film to burn at the corners of the pouch. Eventually a condition is reached where, if the filler operator fails to change the woven glass fibre cloth and the silicone rubber, pouches are produced with "corner leaks".

It has been found that by placing the thermally insulating strip 16 in jaw 11 only under the position where the thermoplastic film passes, the energy required to make the heat seal can be reduced by about 40%. This results in substantially lower heat sealing element temperatures under the film because heat from the element is directed towards the film rather than being drawn towards the jaw acting as a heat sink. At the outboard ends of the sealing element, the woven glass fibre cloth under heat sealing element 12 provides only limited thermal insulation from the jaw (acting as a heat sink) and the heat there is drawn towards the jaw, thus keeping the ends cool. As will be understood by those skilled in the art, it is undesirable that outboard ends of the sealing element to be too cold, otherwise the film will not seal at the edges. In practice, the insulating strip 16 need only to be as long as the film is wide, or slightly wider to accommodate situations when the film does not always land exactly centred over the thermally insulating strip, as the jaws close.

Physical dimensions of the thermally insulating material are somewhat dictated by the physical constraints of the jaw. Obviously, the thickness and thermal resistance of the material must be such that there is an adequate thermal barrier. For example, a 6 mm thick thermal insert for a jaw, which had a conductance of 227 W/(m2.K) proved adequate. An insert having a conductance of 47.7 W/(m2.K) was even better. The jaw was made of aluminium having a conductance of about 11 350 W/(m2.K) and there was about 13 mm of metal beneath the channel in which the thermal insert was placed.

The invention is further illustrated by reference to the following examples:

### Example 1:

In a first experiment, a prior art heat sealing assembly was taken and 250 ml of cold water were sealed in a 12.7 cm wide by 11.1 cm long pouch made of 75 µm thick low density polyethylene film at the rate of 60 pouches per minute. The jaw was made of aluminium and was water cooled. Two layers of woven glass fibre cloth impregnated with polytetrafluoroethylene were placed between the heat sealing element and associated jaw. A further layer of woven glass fibre cloth impregnated with polytetrafluoroethylene was placed over the heat sealing element. Temperatures along the heat sealing element temperature were measured with very thin, fast response thermocouples. It was found that the heat sealing element reached a maximum temperature under the pouch of 325°C and 360°C at the outboard ends. This is well above the intermittent maximum temperature rating of 288°C for the polytetrafluoroethylene. Approximately 150 joules of electrical energy were used to make an acceptable heat seal. In continuous operation, it was found that after about one hour the woven cloth over the sealing element was worn and burned unacceptably at the outboard ends of the heat sealing element.

In a second experiment, an insulating strip 12.7 cm long by 6.35 mm deep by 22 mm wide was inserted into a channel cut into the jaw, thus thermally insulating the heat sealing element from the jaw in the area under the pouch only. The insulating strip was a high temperature epoxy which had a temperature rating of 400°C and a thermal conductance of 277 W/(m2.K) (coefficient of thermal conductivity of 1.44 W/(m.K)). One layer of woven glass fibre cloth impregnated with polytetrafluoroethylene was placed between the heat sealing element and the jaw. All other conditions were kept the same as in the first experiment. It was found that the heat sealing element temperature reached a maximum of 320°C under the pouch. At the outboard ends beside the pouch, the maximum temperature was only 230°C. Furthermore, only about 88 joules of electrical energy were required to make a satisfactory seal, an energy reduction of 40%. However, if the pouch film drifted a little sideways, it was found that the pouches did not separate cleanly in the corner which was adjacent the colder outboard end. More energy, i.e. 106 joules was required to get the pouches to separate cleanly and the temperature of the element now reached 360°C under the pouch and 265°C at the outboard end. Clearly one layer of woven glass fibre cloth impregnated with polytetrafluoroethylene under the heat sealing element resulted in too low a temperature at the outboard ends. However, with this setup, it was demonstrated that the woven glass fibre cloth impregnated with polytetrafluoroethylene over the element lasted more than five times longer than in the first experiment.

In a third experiment an insulating strip 13.335 cm long by 6.35 mm deep by 22 mm wide was inserted into the channel cut into the heat sealing bar. The strip was a glass fibre-filled high temperature epoxy insulating sheet having a thermal conductance of 48 W/(m2.K) (coefficient of thermal conductivity of 0.30 W/(m.K). This time two layers of woven glass fibre cloth impregnated with polytetrafluoroethylene were used under the heat sealing element. All other conditions were kept the same as in the other two experiments. It was now found that the heat sealing element temperature reached a maximum of 290°C both under the pouch and beside the pouch at the outboard ends. Only about 85 joules of electrical energy were required to make a satisfactory seal. Additionally, whenever the pouch drifted sideways, it continued to separate cleanly, even in situations when the film of the pouch drifted marginally off the insulating strip, without the necessity for additional electrical energy input to the heat sealing element.

All woven cloth used in these examples was 190 µm thick (including the adhesive) by 190 mm wide. The jaw in which the thermal inserts were placed was made of aluminium which had a thermal conductivity of 154 W/(m.K) or a conductance of about 12 000 W/(m2.K) between the surface of the jaw and the cooling channel in the jaw.

## Claims

1. A heat sealing assembly, for sealing at least two layers of thermoplastic film, comprising first jaw (11) and second jaw, an electrical impulse heat sealing element (12) mounted on the first jaw (11), electrical terminals (17) connected to said element and at least one electrically and thermally insulating film or tape (14) between the first jaw (11) and the heat sealing element (12), at least one of said jaws being capable of transverse motion and adapted to collapse a tubular film made from said thermoplastic film and passing between said jaws, the improvement wherein the first jaw (11) has a thermally insulating material (16) embedded therein along a length about equal to the width of the flattened film and having a width at least as great as the width of the sealing element.

2. A heat sealing assembly according to Claim 1 wherein the thermally insulating material (16) has a width up to about 100 mm wider than the heat sealing element.

3. A heat sealing assembly according to Claim 1 wherein the thermally insulating material (16) has a width of at least 2.0 mm. and a thickness of at least 1 mm.

4. A heat sealing assembly according to Claim 1 wherein the thermally insulating material (16) is made from a glass fibre-filled epoxy insulating material having a thermal conductance of less than 500 W/(m.K).

5. A heat sealing assembly according to Claim 1 wherein the thermally insulating material (16) is made from a glass fibre-filled epoxy insulating material having a coefficient of thermal conductivity of from 0.22 W/(m.K) to 2.2 W/(m.K) and a width of from 2 to 22 mm and a thickness of from 4 to 10 mm.

6. A heat sealing assembly according to Claim 1 wherein the thermally insulated film or tape (14) is a woven glass fibre tape coated or impregnated with a polytetrafluoroethylene.

7. A heat sealing assembly according to Claim 1 wherein the thermally insulated film (14) is a polyimide film.

## Patentansprüche

1. Schweißanordnung zum Verschweißen von wenigstens zwei Lagen Thermoplastfolie, mit einer ersten Backe (11) und einer zweiten Backe, mit einem elektrischen Impulsschweißelement (12), das an der ersten Backe (11) angebracht ist, mit elektrischen Anschlüssen (17), die mit dem Element verbunden sind, und mit wenigstens einer elektrisch und thermisch isolierenden Folie oder einem solchen Band (14) zwischen der ersten Backe (11) und dem Schweißelement (12), wobei wenigstens eine der Backen eine Querbewegung ausführen kann und ausgebildet ist, um einen Folienschlauch, der aus der Thermoplastfolie besteht, flachzulegen und zwischen den Backen durchzuleiten, wobei die Verbesserung in folgendem besteht: in die erste Backe (11) ist ein wärmeisolierendes Material (16) längs einer Länge eingebettet, die ungefähr gleich der Breite der flachgelegten Folie ist, wobei das Material eine Breite hat, die wenigstens so groß wie die Breite des Schweißelements ist.

2. Schweißanordnung nach Anspruch 1, wobei das wärmeisolierende Material (16) eine Breite hat, die bis zu ca. 100 mm breiter als das Schweißelement ist.

3. Schweißanordnung nach Anspruch 1, wobei das wärmeisolierende Material (16) eine Breite von wenigstens 2,0 mm und eine Dicke von wenigstens 1 mm hat.

4. Schweißanordnung nach Anspruch 1, wobei das wärmeisolierende Material (16) aus einem Epoxidisoliermaterial mit Glasfaser-Füllstoff besteht und eine Wärmedurchgangszahl von weniger als 500 W/(m.K) hat.

5. Schweißanordnung nach Anspruch 1, wobei das wärmeisolierende Material (16) aus einem Epoxidisoliermaterial mit Glasfaser-Füllstoff besteht und einen Wärmeleitfähigkeits-Koeffizienten von 0,22 W/(m.K) bis 2,2 W/(m.K) und eine Breite von 2-22 mm und eine Dicke von 4-10 mm hat.

6. Schweißanordnung nach Anspruch 1, wobei die wärmeisolierte Folie oder das wärmeisolierte Band (14) ein Glasfasergewebeband ist, das mit einem Polytetrafluorethylen beschichtet oder getränkt ist.

7. Schweißanordnung nach Anspruch 1, wobei die wärmeisolierte Folie (14) eine Polyimidfolie ist.

## Revendications

1. Ensemble de thermosoudage pour thermosouder au moins deux couches de film thermoplastique, comprenant une première mâchoire (11) et une seconde mâchoire, un élément (12) thermosoudant à impulsions électriques monté sur la première mâchoire (11), des attaches électriques d'extrémité (17) reliées audit élément et au moins un film ou bande (14) d'isolation électrique et thermique entre la première mâchoire (11) et l'élément (12) thermosoudant, au moins une desdites mâchoires étant capable de mouvement transversal et apte à rabattre un film tubulaire réalisé dans ledit film thermoplastique et passant entre lesdites mâchoires, avec le perfectionnement selon lequel la première mâchoire (11) possède un matériau (16) d'isolation thermique inséré sur une longueur approximativement égale à la largeur du film aplati et ayant une largeur au moins aussi grande que la largeur de l'élément soudant.

2. Ensemble de thermosoudage selon la Revendication 1 dans lequel le matériau (16) d'isolation thermique possède une largeur jusqu'à 100 mm supérieure environ à la largeur de l'élément thermosoudable.

3. Ensemble de thermosoudage selon la Revendication 1, dans lequel le matériau (16) d'isolation thermique possède une largeur d'au moins 2,0 mm et une épaisseur d'au moins 1 mm.

4. Ensemble de thermosoudage selon la Revendication 1, dans lequel le matériau (16) d'isolation thermique est réalisé à partir d'un matériau isolant époxy chargé verre ayant une conductance thermique inférieure à 500 W/(m.K).

5. Ensemble de thermosoudage selon la Revendication 1, dans lequel le matériau (16) d'isolation thermique est réalisé à partir d'un matériau isolant époxy chargé verre ayant un coefficient de conductivité thermique comprise entre 0,22W/(m.K) et 2,2 W/(m.K), une largeur comprise entre 2 et 22 mm, et une épaisseur comprise entre 4 et 10 mm.

6. Ensemble de thermosoudage selon la Revendication 1, dans lequel le film ou la bande (14) isolé(e) thermiquement est une bande de fibre de verre tissée enrobée ou imprégnée d'un polytétrafluoroéthylène.

7. Ensemble de thermosoudage selon la Revendication 1, dans lequel le film ou la bande (14) isolé(e) thermiquement est un film de polyimide.
